# EUROPÄISCHE PATENTSCHRIFT

(11) **EP 0 615 812 B1**
(45) Veröffentlichungstag und Bekanntmachung des Hinweises auf die Patenterteilung: **27.12.1996**
(21) Anmeldenummer: 94103083.5
(22) Anmeldetag: 02.03.1994
(51) Int. Cl.: B23Q 17/22, G01B 3/08, B27B 27/10

(54) **Winkelanschlag für Werkzeugmaschinen**
Angled stop for machine tools
Butée angulaire pour machines-outils

(30) Priorität: 16.03.1993 DE 9303843 U
(43) Veröffentlichungstag der Anmeldung: 21.09.1994
(73) Patentinhaber: Wilhelm Altendorf GmbH & Co. KG, D-32429 Minden (DE)
(72) Erfinder: Thiele, Siegfried, D-32429 Minden (DE); Tweer, Rolf, D-32429 Minden (DE)
(74) Vertreter: Eisenführ, Speiser & Partner

(56) Entgegenhaltungen:
- DE-U- 8 906 663
- DE-U- 9 114 150
- DE-U- 9 207 797

## Beschreibung

Die Erfindung betrifft einen Winkelanschlag für Werkzeugmaschinen, insbesondere Formatkreissägen, mit einer Anschlagschiene, auf der eine erste Anschlagklappe längsverschieblich, aber feststellbar gelagert und mit einer die Relativstellung der Anschlagklappe zur Anschlagschiene ermittelnden sowie anzeigenden Meß- und Anzeigeeinheit verbunden ist, und in der eine Stange teleskopartig ausziehund einschiebbar geführt ist und die an ihrem freien Ende eine zweite Anschlagklappe trägt.

Um mit Hilfe von Werkzeugmaschinen maßgenaue Werkstücke herstellen zu können, werden die zu bearbeitenden Rohlinge mittels sogenannter Anschläge auf der Maschine positioniert, nachdem diese den gewünschten Werkstückmaßen entsprechend eingestellt worden sind.

Formatkreissägen dienen in erster Linie zum Zuschneiden von Platten, Brettern und Leisten aus Holz oder Kunststoff, beispielsweise durch Winkel-, Parallel- und Längenschnitte. Hierbei wird häufig zur Einstellung der gewünschten Werkstoffabmessungen ein sogenannter Winkel- oder Linksanschlag verwendet, der im wesentlichen aus einer am Querschlitten angebrachten Anschlagschiene und mindestens einer Anschlagklappe besteht, an denen das Werkstück während des Zuschneidens anliegt.

Bekanntermaßen werden zum Einstellen und Anzeigen des Abstandes einer Anschlagklappe vom Schneidwerkzeug mechanische oder elektronische Meßsysteme verwendet. Ein elektronisches Meßsystem kann beispielsweise aus einem entlang der Anschlagschiene angebrachten, magnetisch kodierten Maßband, einem mit einer Anschlagklappe verbundenen, das Maßband berührungslos abtastenden Sensor sowie einer die vom Sensor aufgenommenen Meßwerte verarbeitenden Schaltungsanordnung und einer die Abstandsmaße optisch darstellenden Anzeigeeinheit bestehen (DE-GM 91 14 150.8).

Bekannt ist auch die Nutzbarmachung mehrerer umlegbarer, an einer Anschlagschiene angeordneter Anschlagklappen für verschiedene Meßbereiche. Hierbei kann eine erste verschiebliche Anschlagklappe mit einem ihre Relativstellung aufnehmenden Sensor verbunden sein und eine zweite Anschlagklappe fest mit einer teleskopartig und verschieblich innerhalb der Anschlagschiene gelagerten Teleskopstange verbunden sein. Bei einem derartigen Anschlag sind für die Abstandsbestimmung der beiden Anschlagklappen mit einem elektronischen System jeweils ein Maßband auf der teleskopartigen Stange und der Anschlagschiene sowie Zwei Sensoren erforderlich, woraus relativ hohe Herstellkosten resultieren (DE-GM 92 07 797.8).

Die der Erfindung zugrundeliegenden Aufgabe besteht darin, einen kostengünstig herzustellenden Winkelanschlag bereitzustellen, bei dem auf einfache Weise die Relativstellungen mehrerer Anschlagklappen gegenüber dem Werkgang in unterschiedlichen Meßbereichen mittels einer einzigen Meß- und Anzeigeeinheit und einem Maßband ermittelt und eingestellt werden können.

Die Aufgabe wird durch einen Winkelanschlag der eingangs genannten Art dadurch gelöst, daß eine an der Meß- und Anzeigeeinheit angesetzte Kupplung die Stange mit der Meß- und Anzeigeeinheit lösbar verbindet. Durch eine derartige mechanische Koppelung können mit nur einem Sensor und einem magnetisch kodierten Maßband die Relativstellungen zweier Anschlagklappen einfach und insbesondere unabhängig voneinander bestimmt sowie eingestellt werden.

Vorteilhafterweise besteht die Kupplung aus einem quer zur Längsachse der Stange beweglichen Rastbolzen, der in eine Bohrung in der Stange einführbar ist, wodurch auf einfache Weise eine Kupplung verwirklicht ist, die beispielsweise mit einem Griff manuell betätigt werden kann.

Vorteilhafterweise ist der Meßbereich der Meß- und Anzeigeeinheit bei Eingreifen der Kupplung auf die zweite Anschlagklappe umgeschaltet, wodurch sich diese, insbesondere bei häufigem Umschalten zwischen den Meßbereichen, schnell auf den gewünschten Abstand einstellen läßt. Die Umschaltung kann beispielsweise durch einen elektrischen Schalter an der Kupplung ausgeführt werden.

Von Vorteil ist auch eine Ausführungsform, bei der die Verbindung zwischen der ersten Anschlagklappe und der Meß- und Anzeigeeinheit lösbar ist, so daß, nachdem die erste Anschlagklappe in der gewünschten Position festgestellt worden ist, die Einstellung der zweiten oder einer weiteren Anschlagklappe durch Ankoppeln der Meß- und Anzeigeeinheit vorgenommen werden kann, ohne die bereits festgelegte erste Anschlagklappe erneut verschieben zu müssen.

Eine vorteilhafte Weiterbildung besteht darin, daß die Stange mit der zweiten Anschlagklappe gegenüber der Anschlagschiene arrtierbar ist, so daß die zweite Anschlagklappe in der gewünschten Stellung auf der Anschlagschiene durch eine einfach zu handhabende Klemm-Vorrichtung festgestellt werden kann.

Bei einem Winkelanschlag, bei dem eine dritte Anschlagklappe auf der Anschlagschiene längsverschieblich und dieser gegenüber arretierbar geführt sowie an die Meß- und Anzeigeeinheit ankoppelbar ist, können drei Abstandsmaße der Anschlagklappen vom Werkzeug in unterschiedlichen Meßbereichen eingestellt sein und jeweils durch Umlegen der Anschlagklappen aktiviert werden. Besteht die Kupplung für die dritte Anschlagklappe aus einem nur auf Druck wirksamen Schleppanschlag, bei dessen Anlage die dritte Anschlagklappe einen definierten Abstand von der ersten Anschlagklappe hat, ist die Einstellbarkeit der dritten Anschlagklappe auf besonders einfache Weise realisiert und dadurch, daß der Schleppanschlag einstellbar ist, auch exakt möglich.

Ein schneller Wechsel des Meßbereichs ist möglich, wenn die Anschlagklappen in bekannter Weise aus einer Wirkstellung in eine Ruhestellung schwenkbar sind und ihre Verschwenkung den Meßbereich der Meß- und Anzeigeeinheit umschaltet, beispielsweise durch elektromechanische Schalter, und wenn bei anliegendem Schleppanschlag der Meßbereich der Meß- und Anzeigeeinheit auf die dritte Anschlagklappe umgeschaltet ist.

Im folgenden wird die vorliegende Erfindung beispielshalber unter Bezugnahme auf die beiliegenden Zeichnungen beschrieben. Es zeigen:
- Fig. 1: eine perspektivische Darstellung einer bevorzugten Ausführungsform eines Winkelanschlags mit drei Anschlagklappen und
- Fig. 2: eine Ausführungsform nach Fig. 1, bei der die zweite Anschlagklappe in einer ausgefahrenen Position dargestellt ist und
- Fig. 3: einen einstellbaren Schleppanschlag, eine Kupplung mit Rastbolzen sowie einen Teil der Meß- und Anzeigeeinheit.

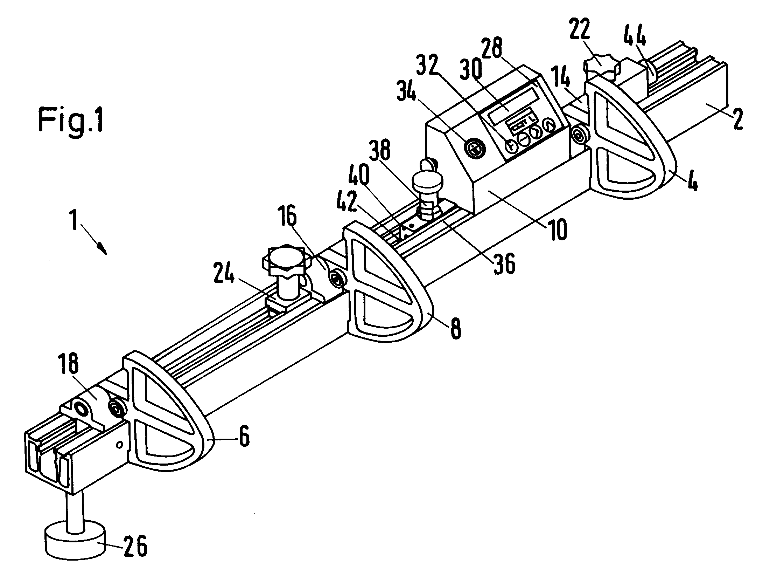

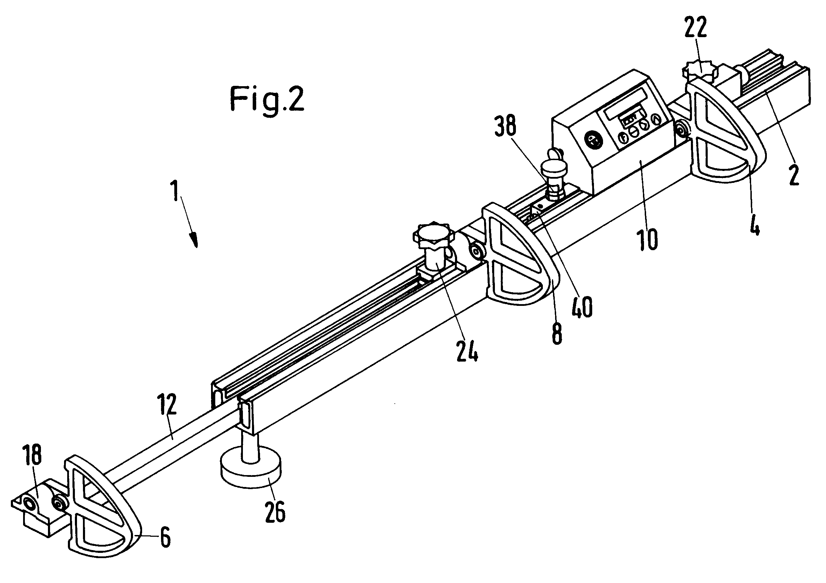

Der in Fig. 1 abgebildete Winkelanschlag 1 umfaßt im wesentlichen eine Anschlagschiene 2, eine erste Anschlagklappe 4, eine zweite Anschlagklappe 6, eine dritte Anschlagklappe 8, eine Meß- und Anzeigeeinheit 10 und eine innerhalb der Anschlagschiene 2 geführte Stange 12 (in Fig. 1 nicht dargestellt, vgl. aber Fig. 2), die an ihrem einen freien Ende die zweite Anschlagklappe 6 trägt. Der Winkelanschlag 1 wird an einem Querschlitten (nicht dargestellt) einer Werkzeugmaschine, insbesondere einer Formatkreissäge, aufgesteckt und durch entsprechende Einrichtungen, beispielsweise Sterngriffmuttern oder Exzenterhebeln, befestigt. Der Winkelanschlag 1 ist mittels des Querschlittens relativ zum angetriebenen Werkzeug verfahrbar und kann gegebenenfalls zum Ausführen von Gehrungsschnitten verschwenkbar gehaltert sein.

Die Anschlagklappen 4 und 8 sind in bekannter Weise verschwenkbar an Schiebern 14 und 16 befestigt, die auf der Anschlagschiene 2 längsverschieblich gelagert sind, und die Anschlagklappe 6 ist ebenfalls verschwenkbar an einem Stangenansatz 18 befestigt, welcher seinerseits fest mit dem einen Ende der innerhalb der als Hohlprofil ausgebildeten Anschlagschiene 2 teleskopartig auszieh- und einschiebbar geführten Stange 12 verbunden ist. Aufgrund der verschwenkbaren Befestigung an den Schiebern 14 und 16 bzw. am Stangenansatz 18, sind die Anschlagklappen 4, 8 und 6 aus einer Wirkstellung in eine Ruhestellung schwenkbar, beispielsweise durch manuelles Umlegen. Mittels an den Schiebern 14 und 16 bzw. am Stangenansatz 18 vorgesehenen Klemmeinrichtungen 22, 24 und 26 sind die Anschlagklappen 4, 8 und 6 stufenlos in einer gewünschten Stellung in Bezug auf die Anschlagschiene 2 feststellbar. Die Feststellbarkeit der Stange mit der zweiten Anschlagklappe 6 kann auch dadurch realisiert werden, daß die Klemmeinrichtung 26 an einer anderen als der dargestellten Position an der Anschlagschiene 2 vorgesehen ist, beispielsweise nahe der Meß- und Anzeigeeinheit 10. Durch die Klemmeinrichtungen 22, 24 und 26, die beispielsweise manuell durch Verdrehen von Sterngriffmuttern oder Exzenterhebeln manuell betätigt werden, werden die Anschlagklappen durch eine reibschlüssige Verbindung festgelegt.

In Fig. 2 ist die zweite Anschlagklappe 6 in einer ausgefahrenen Stellung dargestellt, in der die teleskopartig ausziehbare Stange 12 deutlich zu erkennen ist.

Die Meß- und Anzeigeeinheit 10, die in einem geschlossenen Gehäuse untergebracht ist, ist in diesem Ausführungsbeispiel an dem Schieber 14 befestigt und somit mit der ersten Anschlagklappe 4 verbunden und gemeinsam mit dieser auf der Anschlagschiene 2 verschiebbar. Die Meß- und Anzeigeeinheit 10 weist einen nicht dargestellten Sensor, eine Stromquelle, ein Bedienungs- und Anzeigefeld 28, ein Digitaldisplay 30, eine Tastatur 32 sowie einen Hauptschalter 34 auf. Der Sensor tastet berührungslos ein entlang der Anschlagschiene 2 angebrachtes magnetisch kodiertes Maßband 36 ab, so daß von einer ebenfalls innerhalb der Meß- und Anzeigeeinheit untergebrachten Schaltungs- und Prozessoreinheit die jeweilige Relativstellung des Sensors, somit der Meß- und Anzeigeeinheit 10 und folglich der ersten Anschlagklappe 4 ermittelt und angezeigt wird.

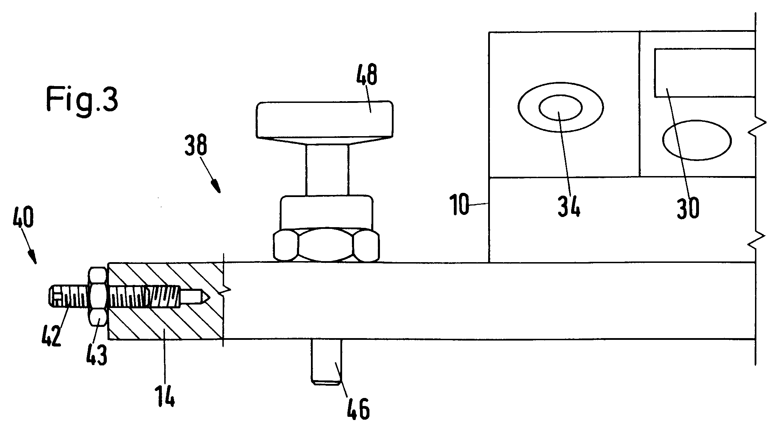

An einem Ende des Schiebers 14 ist angrenzend an die Meß- und Anzeigeeinheit 10 eine mit dieser verbundene Kupplung 38 vorgesehen, die die Stange 12 lösbar mit der Meß- und Anzeigeeinheit 10 verbindet, indem ein axial verschieblich gelagerter und manuell beweglicher Rastbolzen 46 (vgl. Fig. 3) in eine quer zu Längsachse der Stange 12 angeordnete Bohrung (nicht dargestellt) einführbar und herausziehbar ist, so daß eine formschlüssige Verbindung hergestellt werden kann. Durch die Ankuppelbarkeit der mit der Stange verbundenen zweiten Anschlagklappe 6 an die Meß- und Anzeigeeinheit 10 kann mit Hilfe dieser bei genauer Kenntnis des Abstandes der Bohrung von der Anschlagklappe 6 dessen Relativstellung ermittelt werden. Folglich können mit der Meß- und Anzeigeeinheit 10 in Zusammenarbeit mit dem Maßband 36 die Relativstellungen der Anschlagklappen 4 und 6 in Bezug auf die Anschlagschiene 2 bestimmt werden. An der Kupplung 38 ist zusätzlich ein nicht dargestellter Schalter vorgesehen, durch den der Meßbereich der Meß- und Anzeigeeinheit 10 bei Eingreifen der Kupplung automatisch auf die zweite Anschlagklappe 6 umgeschaltet ist, so daß der Abstand der Anschlagklappe 6 vom (nicht dargestellten) Werkzeug unmittelbar auf dem Digitaldisplay 30 angezeigt wird.

Zwischen der ersten Anschlagklappe 4 und der Meß- und Anzeigeeinheit 10 kann entweder eine feste Verbindung bestehen, oder die Verbindung zwischen diesen beiden Bauteilen ist lösbar, beispielsweise durch eine mechanische Kupplung oder durch eine schnell lösbare Schraubverbindung, so daß die Meß- und Anzeigeeinheit 10 unabhängig von der Anschlagklappe 4 bei Eingreifen der Kupplung 38 gemeinsam mit der zweiten Anschlagklappe 6 zur Einstellung der zweiten Anschlagklappe 6 verschoben werden kann, während die erste Anschlagklappe 4 in der vorher eingestellten Relativstellung verbleibt.

Die ebenfalls auf der Anschlagschiene 2 verschiebliche dritte Anschlagklappe 8 ist mittels eines sogenannten Schleppanschlages 40 an die Meß- und Anzeigeeinheit 10 ankuppelbar. In diesem Ausführungsbeispiel ist der Schleppanschlag 40 ebenfalls an dem einen Ende des Schiebers 14 neben der Meß- und Anzeigeeinheit 10 in einem definierten Abstand sowohl zu der ersten Anschlagklappe 4 als auch zu dem Sensor der Meß- und Anzeigeeinheit 10 angeordnet, so daß bei Berührung des Schleppanschlags 40 mit dem Schieber 16 und somit der dritten Anschlagklappe 8 dessen Relativstellung exakt ermittelt wird. Bei Verwendung eines Schleppanschlages kann die Anschlagklappe 8 nur in eine Richtung auf der Anschlagschiene 2 verschoben werden, während bei einer ebenfalls möglichen Verwendung einer mehrseitig wirkenden Ankupplung die dritte Anschlagklappe 8 in beide Richtungen auf der Anschlagschiene verschoben werden könnte. Mittels einer Einstell-Schraube 42 und einer Kontermutter 43 kann der Schleppanschlag 40 exakt eingestellt werden.

In Fig. 3 sind der Schleppanschlag 40, die Kupplung 38 und ein Teil der Meß- und Anzeigeeinheit 10 dargestellt. Der in Teilschnittdarstellung abgebildete Schleppanschlag 40, der an einem Ende des Schiebers 14 angeordnet ist, ist mittels der Einstell-Schraube 42, die mit einem in den Schieber 14 geschnittenen Gewinde in Eingriff steht, einstellbar, und die Einstell-Schraube 42 kann mit der Kontermutter 43 festgelegt werden. Zusätzlich ist der Rastbolzen 46 der Kupplung 38 dargestellt, der durch Betätigung eines Griffes 48 axial verschoben werden kann.

Durch die Verschwenkung der Anschlagklappen 4, 8 und 6 aus ihrer Wirkstellung in die Ruhestellung werden nicht dargestellte Schalter betätigt, durch die der Meßbereich der Meß- und Anzeigeeinheit 10 umgeschaltet wird. An dem Schleppanschlag 40 ist ebenfalls ein Schalter (nicht dargestellt) vorgesehen, durch den der Meßbereich der Meß- und Anzeigeeinheit 10 auf die dritte Anschlagklappe 8 umgeschaltet wird, wenn der Schleppanschlag 40 auf die Anschlagklappe 8 geschaltet ist.

In diesem Ausführungsbeispiel hat die erste Anschlagklappe 4 einen Meßbereich von 140 bis 1450 mm, die Anschlagklappe 8 einen Meßbereich von etwa 440 bis 1450 mm und die Anschlagklappe 6 einen Meßbereich von etwa 1450 bis 2750 mm. Mit Hilfe der Tastatur 32 kann die jeweilige Stellung der Anschlagklappen durch einfaches Umschalten festgestellt werden. Am Schieber 14 der ersten Anschlagklappe 4 ist zur Feineinstellung eine Einstellschraube 44.

## Patentansprüche

1. Winkelanschlag für Werkzeugmaschinen, insbesondere Formatkreissägen,
mit einer Anschlagschiene (2), auf der
eine erste Anschlagklappe (4) längsverschieblich, aber feststellbar gelagert und mit einer die Relativstellung der Anschlagklappe zur Anschlagschiene ermittelnden sowie anzeigenden Meß- und Anzeigeeinheit (10) verbunden ist,
und in der eine Stange (12) teleskopartig auszieh- und einschiebbar geführt ist, die an ihrem freien Ende eine zweite Anschlagklappe (6) trägt,
dadurch gekennzeichnet, daß eine an der Meß- und Anzeigeeinheit (10) angesetzte Kupplung (38) die Stange (12) mit der Meß- und Anzeigeeinheit (10) lösbar verbindet.

2. Winkelanschlag nach Anspruch 1,
dadurch gekennzeichnet, daß die Kupplung (38) aus einem quer zur Längsachse der Stange (12) beweglichen Rastbolzen (46) besteht, der in eine Bohrung in der Stange (12) einführbar ist.

3. Winkelanschlag nach Anspruch 1 oder 2,
dadurch gekennzeichnet, daß bei Eingreifen der Kupplung (38) der Meßbereich der Meß- und Anzeigeeinheit (10) auf die zweite Anschlagklappe (6) umgeschaltet ist.

4. Winkelanschlag nach Anspruch 1,
dadurch gekennzeichnet, daß die Verbindung zwischen der ersten Anschlagklappe (4) und der Meß- und Anzeigeeinheit (10) lösbar ist.

5. Winkelanschlag nach einem der vorhergehenden Ansprüche, dadurch gekennzeichnet, daß die Stange (12) mit der zweiten Anschlagklappe (6) gegenüber der Anschlagschiene (2) arretierbar ist.

6. Winkelanschlag nach einem der vorhergehenden Ansprüche, dadurch gekennzeichnet, daß eine dritte Anschlagklappe (8) auf der Anschlagschiene (2) längsverschieblich und dieser gegenüber arretierbar geführt sowie an die Meß- und Anzeigeeinheit (10) ankuppelbar ist.

7. Winkelanschlag nach Anspruch 6,
dadurch gekennzeichnet, daß die Kupplung (38) aus einem nur auf Druck wirksamen Schleppanschlag (40) besteht, bei dessen Anlage die dritte Anschlagklappe (8) einen definierten Abstand von der ersten Anschlagklappe (4) hat.

8. Winkelanschlag nach Anspruch 7,
dadurch gekennzeichnet, daß der Schleppanschlag (40) einstellbar ist.

9. Winkelanschlag nach einem der vorhergehenden Ansprüche, dadurch gekennzeichnet, daß die Anschlagklappen (4, 8, 6) in bekannter Weise aus einer Wirkstellung in eine Ruhestellung schwenkbar sind und ihre Verschwenkung den Meßbereich der Meß- und Anzeigeeinheit (10) umschaltet.

10. Winkelanschlag nach Anspruch 7 oder 8,
dadurch gekennzeichnet, daß bei anliegendem Schleppanschlag (40) der Meßbereich der Meß- und Anzeigeeinheit (10) auf die dritte Anschlagklappe (8) umgeschaltet ist.

## Claims

1. Angled stop for machine tools, particularly panel saws, comprising a stop bar (2), on which is mounted a first stop flap (4) so as to be longitudinally displaceable but lockable in position, and which is connected to a measuring and indicating unit (10) which detects and indicates the relative position of the stop flap relative to the stop bar, the stop bar being telescopically extractably and retractably guided a bar (12) which carries at its free end a second stop flap (6), characterised in that a coupling (38), which is releasably situated on the measuring and indicating unit (10) connects the bar (12) to the measuring and indicating unit (10).

2. Angled stop according to claim 1, characterized in that the coupling (38) comprises a retaining bolt (46) which is movable transversely to the longitudinal axis of the bar (12) and may be inserted into a bore in the bar (12).

3. Angled stop according to claim 1 or 2, characterised in that, on engagement of the coupling (38), the measuring range of the measuring and indicating unit (10) is switched over to the second stop flap (6).

4. Angled stop according to claim 1, characterised in that the connection between the first stop flap (4) and the measuring and indicating unit (10) is releasable.

5. Angled stop according to any one of the preceding claims, characterized in that the bar (12) with the second stop flap (6) may be locked relative to the stop bar (2).

6. Angled stop according to any one of the preceding claims, characterised by a third stop flap (8), which is longitudinally displaceable on and lockable with respect to the stop bar (2) and is also connectable to the measuring and indicating unit (10).

7. Angled stop according to claim 6, characterised in that the coupling (38) comprises a drag stop (40) responsive only to pressure on whose contact the third stop flap (8) has a defined spacing from the first stop flap (4).

8. Angled stop according to claim 7, characterised in that the drag stop (40) is adjustable.

9. Angled stop according to any one of the preceding claims, characterised in that the stop flaps (4, 8, 6) are, in a manner known per se, tiltable from an active position to a non-active position and their tilting switches over the measuring range of the measuring and indicating unit (10).

10. Angled stop according to claim 7 or 8, characterised in that when the drag stop (40) is in engagement the measuring range of the measuring and indicating unit (10) is switched over to the third stop flap (8).

## Revendications

1. Butée angulaire pour machines-outils, notamment destinée à des scies circulaires pour mise au format,
présentant un rail fixe (2) sur lequel est logé un premier volet de butée (4) se déplaçant dans le sens de la longueur ou pouvant être fixé, et relié à une unité de mesure et d'affichage (10) déterminant et affichant la position relative du volet de butée par rapport au rail fixe,
et dans lequel une tige (12) coulisse en s'étirant et en se rétractant de manière télescopique, laquelle est munie à son extrémité libre d'un deuxième volet de butée (6),
caractérisée en ce qu'un dispositif de couplage (38) fixé sur l'unité de mesure et d'affichage (10) relie de manière amovible la tige (12) à l'unité de mesure et d'affichage (10).

2. Butée angulaire selon la revendication 1,
caractérisé en ce que le dispositif de couplage (38) est constitué d'un boulon d'arrêt (46) mobile transversalement par rapport à l'axe longitudinal de la tige (12), boulon qu'il est possible d'introduire dans un alésage de la tige (12).

3. Butée angulaire selon la revendication 1 ou 2,
caractérisé en ce que lors de la mise en prise du dispositif de couplage (38), le champ de mesure de l'unité de mesure et d'affichage (10) est commuté sur le deuxième volet de butée (6).

4. Butée angulaire selon la revendication 1,
caractérisé en ce que la liaison entre le premier volet de butée (4) et l'unité de mesure et d'affichage (10) est amovible.

5. Butée angulaire selon l'une quelconque des revendications précédentes, caractérisé en ce que la tige (12) peut être bloquée contre le rail fixe au moyen du deuxième volet de butée (6).

6. Butée angulaire selon l'une quelconque des revendications précédentes,
caractérisé en ce qu'un troisième volet de butée (8) peut se déplacer en coulissant dans le sens de la longueur sur le rail fixe (2) et peut être bloqué contre celui-ci tout en pouvant être couplé à l'unité de mesure et d'affichage (10).

7. Butée angulaire selon la revendication 6,
caractérisé en ce que le dispositif de couplage (38) est constitué d'une butée d'entraînement (40) mobile ne fonctionnant que sous l'effet d'une pression, équipement sur lequel le troisième volet de butée (8) est séparé d'une distance définie par rapport au premier volet de butée (4).

8. Butée angulaire selon la revendication 7,
caractérisé en ce que la butée d'entraînement (40) est réglable.

9. Butée angulaire selon l'une quelconque des revendications précédentes,
caractérisé en ce que les volets de butée (4, 8, 6) peuvent pivoter d'une manière connue d'une position d'actionnement vers une position de repos, le pivotement commutant le champ de mesure de l'unité de mesure et d'affichage (10).

10. Butée angulaire selon la revendication 7 ou 8, caractérisé en ce qu'au niveau de la butée d'entraînement adjacente (40), le champ de mesure de l'unité de mesure et d'affichage (10) est commuté sur le troisième volet de butée (8).
